# EUROPEAN PATENT SPECIFICATION

(11) **EP 2 094 474 B1**
(45) Date of publication and mention of the grant of the patent: **05.09.2012**
(21) Application number: 06849492.1
(22) Date of filing: 22.12.2006
(51) Int. Cl.: B29D 30/10

(54) **PROCESS AND PLANT FOR PRODUCING TYRES FOR VEHICLE WHEELS**
VERFAHREN UND ANLAGE ZUR HERSTELLUNG VON REIFEN FÜR FAHRZEUGRÄDER
PROCÉDÉ ET INSTALLATION POUR LA PRODUCTION DE PNEUS POUR ROUES DE VÉHICULES

(43) Date of publication of application: 02.09.2009
(73) Proprietor: Pirelli Tyre S.p.A., 20126 Milano (IT)
(72) Inventor: MARIANI, Fiorenzo, I-20126 Milano (IT); MARCHINI, Maurizio, I-20126 Milano (IT)
(74) Representative: Checcacci, Giorgio
(86) International application number: PCT/IB2006/004147
(87) International publication number: WO 2008/078138

(56) References cited:
- EP-A1- 1 568 475
- WO-A-01/39963
- WO-A-02/096630
- US-A- 6 143 110

## Description

The object of the present invention is a process for producing tyres for vehicle wheels.

In particular, the present invention relates to a process for producing tyres built on a toroidal support.

It is also an object of the invention a plant for producing tyres for vehicle wheels, able to be used for carrying out the aforementioned producing process.

Modem production cycles of a tyre provide that, after a building process wherein the various components of the same tyre are made and/or assembled in a building line, a moulding and vulcanization process is carried out, in a suitable vulcanization line, adapted for defining the tyre structure according to a desired geometry and tread pattern.

A tyre generally comprises a toroidally ring-shaped carcass including one or more carcass plies, strengthened with reinforcing cords lying in substantially radial planes (a radial plane contains the rotation axis of the tyre). Each carcass ply has its ends integrally associated with at least one metal reinforcing annular structure, known as bead core, constituting the reinforcing at the beads, i.e. at the radially inner ends of the tyre, having the function of enabling the assembling of the tyre with a corresponding mounting rim. Placed crown wise to said carcass is a band of elastomeric material, called tread band, within which, at the end of the moulding and vulcanization steps, a raised pattern is formed for ground contact. A reinforcing structure, generally known as belt structure, is arranged between the carcass and the tread band. Such structure usually comprises, in the case of car tyres, at least two radially superposed strips of rubberised fabric provided with reinforcing cords, usually of metal material, arranged parallel to each other in each strip and in a crossed relationship with the cords of the adjacent strip, preferably symmetrically arranged with respect to the equatorial plane of the tyre. Preferably, the belt structure further comprises at a radially outer position thereof, at least on the ends of the underlying belt strips, also a third layer of textile or metallic cords, circumferentially disposed (at zero degrees).

Finally, in tyres of the tubeless type, that is devoid of an air tube, a radially inner layer, called liner, is present which has imperviousness features for ensuring the air-tightness of the tyre itself.

To the aims of the present invention and in the following claims, by the term "elastomeric material" it is intended a composition comprising at least one elastomeric polymer and at least one reinforcing filler. Preferably, such composition further comprises additives such as cross-linking and/or plasticizing agents. By virtue of the cross-linking agents, such material may be cross-linked by heating, so as to form the final manufactured article.

In recent times, tyre production processes in which a green tyre is built on a rigid toroidal support have been introduced in the field. Said processes are preferably used for tyres produced starting from a limited number of elementary semifinished products fed onto said toroidal support whose outer profile coincides with that of the radially inner surface of the tyre to be produced. The toroidal support is moved, preferably by means of a robotized system, among a plurality of working stations in each of which a particular building step of the tyre is carried out, through automated sequences. At the end of the building steps, the toroidal support with the green tyre supported thereby is arranged inside a vulcanization mould.

In the present context, by the term "green tyre" it is indicated a tyre obtained by the building process and still to be vulcanized.

An example of the above processes is described in WO 01/32409, in the name of the same Applicant, which illustrates a tyre building line provided with working stations, each arranged to make and assemble at least one structural component of the tyre being processed, wherein at least one series of tyres, comprising at least a first and a second model of tyres that are different from each other, is treated simultaneously, and wherein the transferral of the tyres to the vulcanization line is carried out through robotized arms and according to a transferring rate which is equal to the transferring rate of the tyres to each of said working stations.

On the other hand WO 01/39963, in the name of the same Applicant, illustrates a process for producing tyres that are different from each other, comprising a building unit having a plurality of working stations, each adapted for assembling at least one structural component on at least one type of tyre being processed, a vulcanization unit, and a device for transferring and moving the tyre being processed, operating between the working stations and the vulcanization unit.

Said device for transferring and moving the tyre transfers a green tyre from the building unit to the vulcanization unit; after vulcanization, it picks up a vulcanized and moulded tyre from the vulcanization unit and moves it to the first working station of the building unit, where the tyre is removed from the corresponding toroidal support. The latter is then moved by the same device for transferring and moving the tyre into a temperature stabilizing device. If the tyre to be produced requires a toroidal support of a different type, the same device picks up the suitable toroidal support from a feeding station and introduces it into the temperature stabilizing device.

US 6,143,110 discloses a machine for the manufacture of tires on a core from the start of the assembling until vulcanizing. The machine comprises, arranged adjacent to each other on a frame, a tire assembly station comprising means for forming the raw tire by depositing the different compounds on the core in the order and place required by the architecture of the tire, a vulcanization station and a support handling station. A first crane transports the core supporting a row tyre from the assembly station to the vulcanization station. The same crane can transport the core bearing the vulcanized tire from the vulcanization station to the support handling station. A translator grips the core bearing the vulcanized tire into the support handling station and transports it to an evacuation crane. The core is then dismantled by means of grasping means and the tyre is removed by means of the evacuation crane.

The Applicant has noted that since the above device for transferring and moving the tyre is arranged for carrying out numerous operations and making wide displacements, it is often the bottleneck of the producing process. For example, making tyres differing from one another as illustrated in WO 01/39963, due to the different cooling times required by the toroidal supports and to the variability of the operating times of the building line, the transfer device may have to carry out repeated transfers of the toroidal support between one temperature stabilizing station and a stand-by position.

Moreover, the processes described above do not allow an optimum distribution of the production times, nor an optimum management of the transfer device since the repeated transfers of the toroidal support by means of said device, from a cooling station to the next cooling station or from a cooling station to a stand-by position, require the use of such device for unduly long times, thus decreasing the flexibility and the production capacity of the production plant.

The Applicant has then noted that the pathway accomplished by the transfer device are excessively long with consequent increase of the complexity of the production plant.

The Applicant has therefore perceived that by decreasing the number of transfers of the toroidal support it is possible to obtain a simpler producing process that allows to increase the productivity of a plant for producing tyres for vehicle wheels built on a toroidal support, as well as the layout simplicity thereof.

The Applicant has therefore found that by integrating the unit for removing the tyre from the toroidal support and the unit for cooling the same toroidal support into a single working station it is possible to decrease the work load of the transfer device obtaining a more flexible and efficient producing process.

In accordance with a first aspect thereof, the invention relates to a process for producing tyres for vehicle wheels as recited in claim 1.

Such process allows to solve the aforementioned problems and to achieve a decrease of the work load of the first transfer device with consequent improvement of the efficiency.

Advantageously, after the step f) of cooling the toroidal support, the process comprises the step g) of transferring the cooled toroidal support outward the working station by means of the first transfer device.

Preferably, the step f) of cooling the toroidal support comprises the sub-steps of:
f1) cooling the toroidal support to a temperature comprised between about 100°C and about 110°C;
f2) cooling the toroidal support to a temperature comprised between about 55°C and about 65°C;
f3) cooling the toroidal support to a temperature suitable for the tyre building process;

In a preferred embodiment, step f3) provides cooling the toroidal support to a temperature comprised between about 40°C and about 50°C.

Step f1) is preferably carried out with cooling water, advantageously nebulized and sprayed at the outer surface and at the inner surface of the toroidal support.

Preferably, at least one between steps f2) and f3) is carried out with cooling air, advantageously dispensed at the top surface, at the bottom surface and at the outer surface of the toroidal support.

According to a preferred embodiment, the step e) of cooling the toroidal support in the cooling unit comprises the sequential transfer of the toroidal support in at least three specialised stations differing one from the other.

Said sequential transfer is advantageously accomplished by a third transfer device, different from the first transfer device and from the second transfer device.

Said third transfer device preferably comprises a conveyor belt or a robotized arm.

As an alternative, the sequential transfer of the toroidal support from one specialised station to the next one is carried out by the first transfer device.

Advantageously, at least one between step d0) and d4) is carried out by means of said second transfer device.

As an alternative, at least one between said steps d1), d2) and d3) is carried out by means of a device for dismounting/remounting the toroidal support.

According to a preferred embodiment, the step g) of transferring the cooled toroidal support outward the working station is followed by a step h) of introducing the toroidal support into the building line for building a further tyre.

In accordance with a second aspect thereof, the invention relates to a plant for producing tyres for vehicle wheels as recited in claim 13.

Preferred embodiments of the invention are defined in the dependent claims.

Such plant solves the above problems relating to the overload of the transfer device and therefore it is flexible and efficient.

Preferably, the first transfer device is also adapted for transferring the toroidal support outward said working station.

The Applicant has noted that using cooling units provided with specialised stations and with devices for moving the toroidal support from one station to the next one, it is possible to further decrease the work load of the transfer device and at the same time, increase the efficiency of the cooling process and therefore of the whole production process.

The Applicant has further noted that said cooling unit, provided with specialised stations and with advance devices, also allows buffering any anomalies of the production cycle since it also acts as a buffer and consequently, allows eliminating any steps of transfer to stand-by positions.

It is therefore preferable that the cooling unit comprises at least three specialised stations for cooling the toroidal support and it is even more preferable that each of them is adapted for carrying out a function different from the functions carried out by the remaining two.

In a preferred embodiment, said specialised stations comprise devices for dispensing cooling fluids which are movable and adjustable. In this way it is possible to adjust the fluid jets in optimum manner according to the size and geometry of the toroidal supports.

In particular, at least one of the specialised stations comprises at least one dispensing device of cooling water or other fluid. In this way it is possible to use the latent evaporation heat of the fluid for cooling the support.

Advantageously, the first specialised station comprises at least one pair of cooling water dispensing devices which are movable, adjustable and provided with nozzles for nebulizing the water and conveying it at specific areas of the toroidal support.

In particular, said first specialised station comprises a first pair of cooling water dispensers for nebulizing the water and conveying it at the outer surfaces of the toroidal support and a second pair of cooling water dispensers for nebulizing the water and conveying it at the inner surfaces of the toroidal support.

According to a preferred embodiment, said specialised stations comprise at least a second specialised station including at least one device for dispensing cooling air and preferably at least three devices for dispensing cooling air which are movable and adjustable.

In particular, said cooling air dispensing devices comprise at least one top dispensing device, one bottom dispensing device and one side dispensing device for conveying the cooling air respectively on the top, bottom and side surface of the toroidal support.

Advantageously, the cooling unit is provided with at least one device for rotating the toroidal support about the axis thereof. Thanks to such device it is possible to obtain homogeneous temperature conditions on the surfaces of the toroidal support.

Preferably, said cooling unit is provided with a third transfer device for the sequential transfer of the toroidal support from one specialised station to the next one, which is different from the first and from the second transfer device.

Preferably, said third transfer device comprises a conveyor belt which operates with a step-by-step movement.

As an alternative, said third transfer device comprises a robotized arm.

Preferably, the removing unit is provided with a dismounting/remounting device adapted for dismounting the toroidal support and remounting it after the tyre has been removed.

Moreover, the cooling unit is advantageously provided with at least one stand-by position for the toroidal supports which may be used in different process steps.

Preferably, the stand-by positions of the cooling unit are at least two and are respectively arranged at the inlet and at the outlet of the working station.

The tyre production plant may further comprise at least one rail operatively associated with at least one between said first transfer device and said second transfer device, as well as driving devices for moving the first and the second transfer device.

Advantageously, at least one between said first transfer device and said second transfer device comprises a robotized arm.

Further features and advantages of invention will be clear from the following description of some preferred examples of production plants and processes according to the invention, made by way of indicating and non-limiting purpose with reference to the annexed drawings, wherein:
- figure 1 shows a schematic layout of a plant for producing tyres for vehicle wheels wherein the process according to the present invention is carried out;
- figure 2 shows a detail of figure 1;
- figure 3 shows a schematic plan view of a working station, comprising a removing unit and a cooling unit, of a plant for producing tyres for vehicle wheels according to a first embodiment of the invention during a step of the subject process;
- figure 4 shows a side view of figure 3; and
- figures 5a, 5b and 5c show schematic side views of the specialised stations of a cooling unit of a working station of a plant for producing tyres for vehicle wheels according to one embodiment of the invention.
- figure 6 shows a "time - temperature" diagram relating to the surface of a toroidal support during the cooling step according to one embodiment of the process of the present invention.

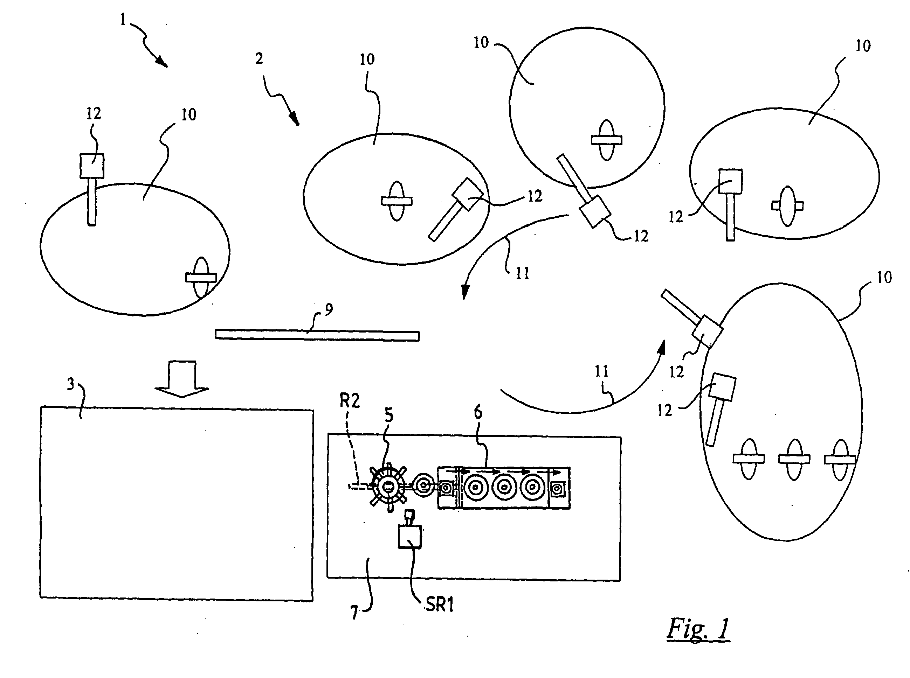

With reference to figure 1, by reference numeral 1 it is generally indicated a plant for producing tyres for vehicle wheels according to the present invention by which the production process according to the present invention is carried out.

Plant 1 comprises a building line 2, wherein each tyre is built by assembling structural components according to a predetermined sequence, and a moulding and vulcanization line 3, wherein each green tyre is moulded and vulcanized, within a respective vulcanization mould, thus becoming a finished product.

The building line 2 comprises a plurality of building stations 10 preferably arranged along a closed loop path indicatively represented by arrows 11 in figure 1.

Preferably, said building stations 10 operate simultaneously with each other, each on at least one tyre for assembling at least one of its structural components thereon.

It should be noted that in the present description and in the subsequent claims, by "structural component" of the tyre it is meant any component selected for example from: liner, sub-liner, carcass ply/plies, sub-belt insert, belt strips either crossing over one another or at zero degrees, attachment sheets for the tread band, tread band, rim, bead filler, textile or metallic reinforcing inserts, anti-abrasion insert, or any portion thereof.

In particular, during the building step the various structural components used for making each tyre are advantageously engaged on a toroidal support whose shape substantially reproduces the internal configuration of the tyre to be obtained. Such a toroidal support has a removable support shaft adapted for retaining the sectors of which the toroidal support is formed of. Such type of toroidal support collapsible or dismountable into a plurality of sectors, so as to be easily removed from the tyre when processing is completed, is for example described in document WO 01/62481 in the name of the Applicant.

Transfer devices 12 operate in the building line 2 for sequentially transferring each of the tyres being processed associated with a respective toroidal support from one of the building stations 10 to the next building station, so as to determine the sequential assembly of all the tyre components.

Preferably, such transfer devices 12 comprise one or more robotized arms associated with at least one of the building stations 10 and operating on the individual toroidal supports for carrying out the sequential transfer of each tyre being processed.

According to the present invention, the production plant 1 further comprises at least one working station 7 interposed between said building line 2 and said moulding and vulcanization line 3 and at least a first transfer device R1 for transferring the moulded and vulcanized tyre and the respective toroidal support inside working station 7.

Said working station 7 comprises:
- at least one removing unit 5 for removing the moulded and vulcanized tyre from the respective toroidal support;
- at least one cooling unit 6 for cooling the toroidal support; and
- at least a second transfer device of the toroidal support R2, different from the first transfer device R1, for transferring the toroidal support from the tyre removing unit 5 to the toroidal support cooling unit 6.

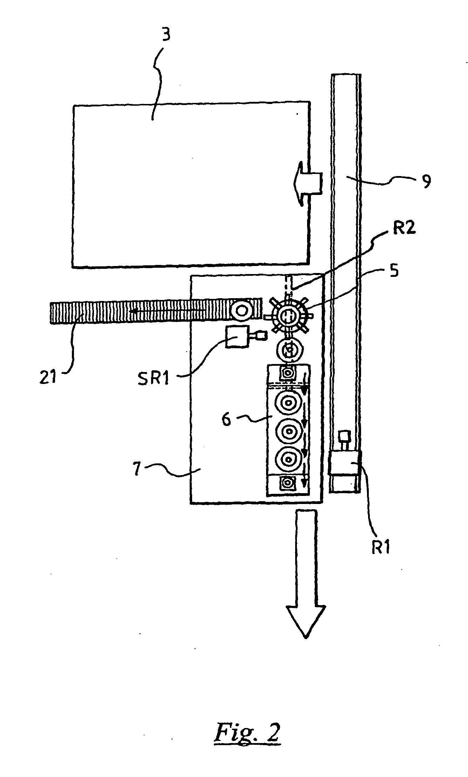

In the embodiment shown in figures 1 and 2, the working station 7 comprises a single removing unit 5, a single cooling unit 6 and one second transfer device R2 for transferring the toroidal support from the first to the second of said units.

According to a preferred embodiment, the first transfer device R1 is also adapted for transferring the toroidal support outward the working station 7.

The removing unit 5 is adapted for receiving a vulcanized tyre and the respective toroidal support for carrying out the operation of removing the vulcanized tyre. Within the present scope, by the term "tyre removal" it is meant at least the set of operations for dismounting the toroidal support and for removing the tyre from the above dismounted toroidal support.

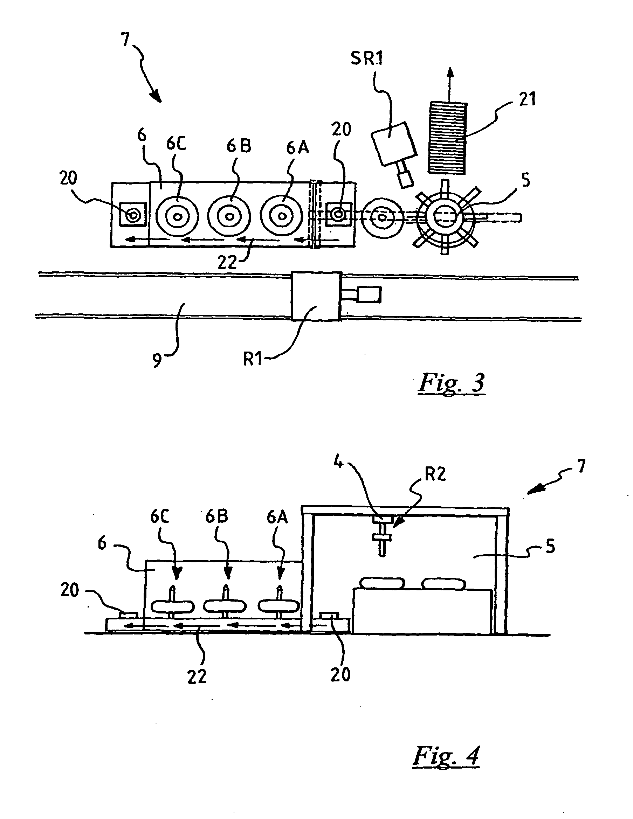

According to a preferred embodiment, said second transfer device R2 is obtained by a handling device 4, illustrated in figure 4, also adapted for extracting and inserting said support shaft of the toroidal support so as to allow the latter to be respectively disassembled in a plurality of sectors and reassembled in its operating toroidal shape.

According to a further alternative embodiment, the removing unit 5 comprises a device SR1 for dismounting / remounting the toroidal support which allows removing the moulded and vulcanized tyre from the toroidal support and remounting the toroidal support itself after the tyre removal.

With particular reference to figures 3 and 4, it is shown that the cooling unit 6 comprises at least three specialised stations 6A, 6B and 6C, each specialised in carrying out a specific step of the cooling of the toroidal support.

According to a preferred embodiment, each of said specialised stations 6A, 6B, 6C is adapted for performing a function that differs from the functions performed by the remaining two.

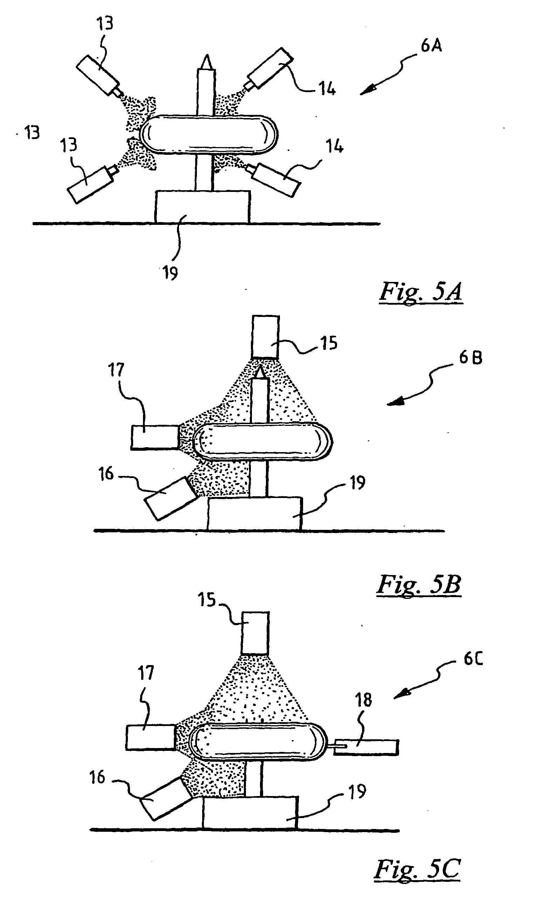

Figures 5A, 5B and 5C show that said specialised stations 6A, 6B, 6C are provided with special dispensing devices 13, 14, 15, 16,17 of cooling fluids.

In particular, the cooling unit 6 comprises a first specialised station 6A including at least one dispensing device 13,14 of cooling water or other service fluids.

In the embodiment shown in figure 5A, said first specialised station 6A comprises two pairs of cooling water dispensing devices 13, 14. Such devices 13, 14 are movable, adjustable and provided with nozzles for nebulizing the water and conveying it at specific areas of the toroidal support.

In particular, a first pair of cooling water dispensers 13 conveys the cooling water at the outer surfaces of the toroidal support and a second pair of cooling water dispensers 14 conveys the water at the inner surfaces of the toroidal support.

The cooling unit 6 of the production plant 1 also comprises a second specialised station 6B which includes devices 15, 16, 17 for dispensing cooling air or other service fluids.

In the embodiment shown in figure 5B, the second specialised station 6B comprises three cooling air dispensing devices 15, 16, 17: a top dispensing device 15, a bottom dispensing device 16 and a side dispensing device 17 for conveying the cooling air respectively on the top, bottom and side surface of the toroidal support.

Said cooling air dispensing devices 15, 16, 17 are preferably movable and adjustable in a manner similar to the cooling water dispensing devices 13, 14.

The cooling unit 6 is further provided with one or more temperature sensors 18 arranged in one or more of the specialised stations 6A, 6B, 6C, adapted for monitoring the thermal trend of the toroidal supports during the production process according to the present invention.

The cooling unit 6 is further provided with at least one rotation device 19 adapted for rotating the toroidal support about the axis thereof while cooling.

The cooling unit 6 is finally provided with a third transfer device adapted for carrying out the sequential transfer of the toroidal support from one specialised station 6A, 6B, 6C to the next one, which is different from the first transfer device R1 and from the second transfer device R2.

Such third transfer device comprises a conveyor belt preferably operating with a step-by-step movement for transferring the toroidal support at predetermined frequencies from one specialised station 6A, 6B, 6C to the next one. In this way, the cooling unit 6 is a tunnel wherein the toroidal supports run according to a travelling direction indicated by arrows 22 in the figures.

Alternatively, said third transfer device comprises a robotized arm that picks up the toroidal support from one specialised station 6A, 6B, 6C and moves it to the next one.

According to an embodiment of the present invention, the production plant 1 is provided with a transport device 21 adapted for transporting the moulded, vulcanized tyre removed from the relevant toroidal support, outward the working station 7.

The cooling unit 6 may be provided with one or more stand-by positions 20 of the toroidal supports adapted for the temporary storage of the toroidal supports.

Preferably, said stand-by positions 20 are two and are respectively arranged at the inlet and at the outlet of the working station 7.

The production plant 1 further comprises at least one rail operatively associated with the first transfer device R1 and/or to the second transfer device R2.

In the embodiments shown in figures 2 and 3, plant 1 is provided with a pair of rails which make up a track 9 on which the first transfer device R1 travels.

The production plant 1 further comprises driving devices, not shown in the figures, for moving the first transfer device R1 and the second transfer device R2.

At least one between said first transfer device R1 and said second transfer device R2 comprises a robotized arm. In the embodiments shown in the figures, R1 comprises a robotized arm.

The vulcanization line 3 comprises at least one unit for vulcanizing the green tyre provided with six vulcanization moulds.

Preferably, the vulcanization moulds are mounted on a turntable to be driven in rotation so as to make the same vulcanization moulds carry out a closed-loop path, sequentially carrying them, one after the other, to a tyre loading/unloading station, each associated with its own toroidal support.

In this way, a green tyre, after having been loaded into a vulcanization mould, is subjected to a moulding and vulcanization process and, once the suitable time to complete the moulding and vulcanization operations has been achieved, is unloaded from the mould at the same loading/unloading station through rotation of the turntable.

The vulcanization moulds are preferably sealed airtight and are arranged to house a tyre being processed previously built on a toroidal support, the outer surface of which substantially reproduces the internal configuration of the tyre to be obtained. Said vulcanization moulds are provided with working fluid passage devices as illustrated for example in WO 2004/045837, in the name of the same Applicant.

If required by production requirements, it is possible to design the vulcanization line 3 so as to comprise two vulcanization units. In this case it is possible but not necessary to provide two working stations 7 or a single working station 7 provided with two removing units and/or two cooling units 6.

With reference to the production plant 1 illustrated in figures 1-5C, a preferred embodiment of a production process according to the invention shall now be described.

In accordance with a first step a), a green tyre is assembled on a respective toroidal support assembling each structural component of the tyre according to a predetermined sequence at the above building stations 10 of the building line 2 of the production plant 1.

This building step of each tyre is carried out for example according to methods illustrated in document WO 01/32409, in the name of the same Applicant.

At the end of the building step, the tyre production process according to the present invention provides the performance of a step b) of moulding and vulcanizing the green tyre in the vulcanization line 3 of the production plant 1 so as to define the structure of the tyre according to the desired geometry and tread pattern.

Afterwards, the process according to the present invention provides a step c) of transferring the toroidal support and the relevant tyre vulcanized in the aforesaid working station 7 comprising the removing unit 5 of the tyre from the respective toroidal support and the cooling unit 6 for cooling the toroidal support. Said step c) is carried out by the above first transfer device R1.

In the removing unit 5 of the working station 7, the tyre is removed from the relevant toroidal support in a step d) that comprises the dismounting of the toroidal support and the removal of the moulded and vulcanized tyre from said toroidal support. Preferably said step d) also comprises the subsequent remounting of the toroidal support, which is therefore ready for a new production cycle.

At this point, the step e) of transferring the toroidal support from the removing unit 5 into the cooling unit 6 is carried out by a second transfer device R2 different from said first transfer device, said second transfer device R2 preferably comprising said handling device 4.

In accordance with the process according to the present invention, the step f) of cooling the toroidal support is carried out in said cooling unit 6.

Once the toroidal support has been cooled, it is transferred outward the working station 7, in accordance with a step g), preferably by means of the first transfer device R1.

In particular, the step f) of cooling the toroidal support comprises the following steps:
f1) cooling the toroidal support to a temperature comprised between about 100°C and about 110°C;
f2) cooling the toroidal support to a temperature comprised between about 55°C and about 65°C;
f3) cooling the toroidal support to a temperature suitable for the tyre building process;

In accordance with a preferred embodiment, step f3) comprises cooling the toroidal support to a temperature comprised between about 40°C and about 50°C.

Preferably, step f1) is carried out by means of cooling water at a temperature comprised between about 10°C and about 20°C and one or both steps f2) and f3) are carried out by cooling air at a temperature comprised between about 3 °C and about 10°C.

As shown in figure 5A, the cooling water is nebulized and sprayed at the outer surface and at the inner surface of the toroidal support.

On the other hand, figures 5B and 5C show how the cooling air is dispensed at the top surface, the bottom surface and the outer surface of the toroidal support.

The process for producing tyres according to an embodiment of the present invention provides that the step e) of cooling the toroidal support comprises the sequential transfer of the toroidal support in at least three specialised stations 6A, 6B, 6C differing one from the other.

Preferably, said sequential transfer of the toroidal support takes place by a third transfer device different from the first transfer device R1 and from the second transfer device R2, said third transfer device comprising a conveyor belt or a robotized arm.

According to a further alternative embodiment, the sequential transfer of the toroidal support from one specialised station 6A, 6B, 6C to the next one is carried out by the first transfer device R1. In that case, the cooling unit 6 is not configured as a tunnel.

The step d) of removing the moulded and vulcanized tyre from the relevant toroidal support in said removing unit 5 comprises the steps of:
d0) extracting the support shaft of the toroidal support;
d1) dismounting the toroidal support;
d2) separating the vulcanized tyre from the toroidal support;
d3) remounting the toroidal support;
d4) inserting said support shaft into the remounted toroidal support.

Preferably, steps d0) and d4) are carried out by the second transfer device R2 in the embodiment of the handling device 4.

Preferably, steps d1), d2) and d3) are carried out by the above device SR1 for dismounting/remounting the toroidal support.

At least one between step d1) of dismounting the toroidal support and step d3) of remounting of the toroidal support is carried out by the above handling device 4. As an alternative, at least one between said steps d1) and d3) is carried out by the second transfer device R2.

Once the cooled toroidal support has been transferred outward the working station 7 in accordance with step g), it is possible to provide a step h) of introduction of the toroidal support into the building line (2) for building a further tyre.

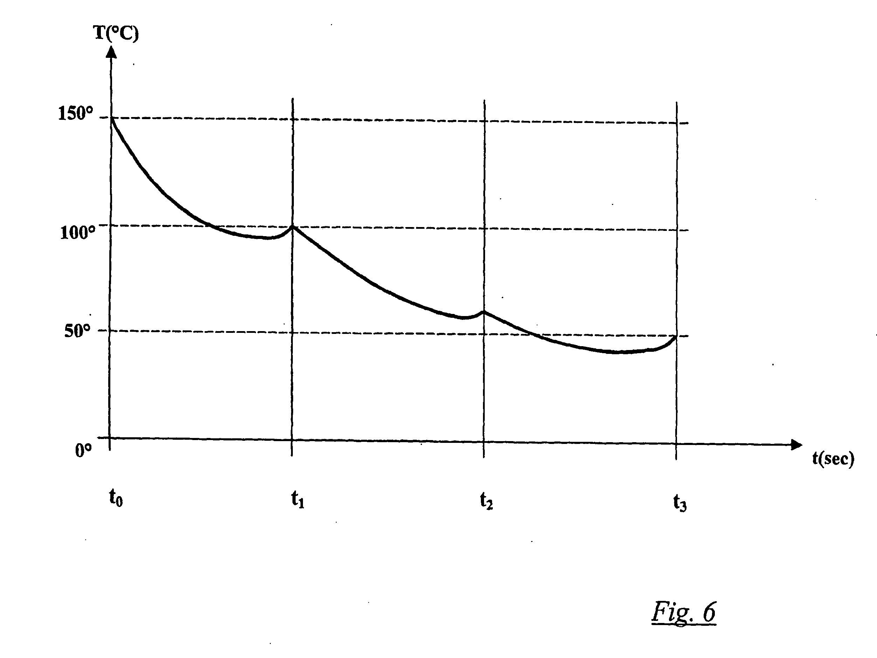

Figure 6 shows a diagram of the surface temperature of a toroidal support as a function of the cooling time elapsed according to one embodiment of the process of the present invention.

In such figure, by "t" it is indicated the cooling time - expressed in seconds (sec.) - and by "T" the surface temperature - expressed in °C - of a toroidal support subject to the process according to one embodiment of the present invention.

In particular, by "to" it is indicated the start time of the cooling step f) that coincides with the beginning of step f1), "t1" the start time of step f2), "t2" the start time of step f3) and by "t3" the start time of step f3) that coincides with the end of step f).

In a tyre production process for motorcycle wheels, according to one embodiment of the present invention, carried out in a production plant 1, of the type illustrated in figures 1 - 5C, if t0 = 0 sec., t1 = about 90 sec., t2 = about 180 sec. and t3 = about 270 sec.

In the scope of the present previous description and the following claims, all the numerical measurements indicating quantity, parameters, percentages, etc, are to be considered as preceded by the term "about", unless otherwise specified. Furthermore, all the intervals of numerical measurement include all the possible combinations of the maximum and minimum numerical values, as well as all the possible intermediate intervals, as well as those specifically indicated in the text.

## Claims

1. Process for producing tyres for vehicle wheels comprising the steps of:
a) building a tyre on a toroidal support in a building line (2) of a production plant (1);
b) moulding and vulcanizing said built tyre in a vulcanization line (3) of said production plant (1);
c) transferring by means of a first transfer device (R1) the toroidal support and the relevant moulded and vulcanized tyre to a working station (7) comprising a removing unit (5) for removing the tyre from the respective toroidal support and a cooling unit (6) for cooling the toroidal support;
d) removing the moulded and vulcanized tyre from the relevant toroidal support in said removing unit (5);
e) transferring the toroidal support from said removing unit (5) to said cooling unit (6) by means of a second transfer device (R2) different from said first transfer device (R1);
f) cooling the toroidal support in said cooling unit (6);
wherein the step d) of removing the moulded and vulcanized tyre from the relevant toroidal support in said removing unit (5) comprises the sub-steps of:
d0) extracting a support shaft of said toroidal support;
d1) dismounting the toroidal support;
d2) separating the vulcanized tyre from the toroidal support;
d3) remounting the toroidal support;
d4) inserting said support shaft into the remounted toroidal support;
wherein at least one between said steps d1) and d2) is carried out by the second transfer device (R2).

2. Process for producing tyres for vehicle wheels according to claim 1, comprising after the step f) of cooling the toroidal support, the step g) of transferring the cooled toroidal support outward the working station (7) by means of the first transfer device (R1).

3. Process for producing tyres for vehicle wheels according to one of the previous claims, wherein step f) of cooling the toroidal support comprises the sub-steps of:
f1) cooling the toroidal support to a temperature comprised between about 100°C and
about 110°C;
f2) cooling the toroidal support to a temperature comprised between about 55°C and
about 65°C;
f3) cooling the toroidal support to a temperature suitable for the tyre building process;

4. Process for producing tyres for vehicle wheels according to claim 3, wherein step f1) is carried out by means of cooling water.

5. Process for producing tyres for vehicle wheels according to claim 4, wherein at least one between steps f2) and f3) is carried out by means of cooling air.

6. Process for producing tyres for vehicle wheels according to claim 5, wherein the cooling air is dispensed at the top surface, at the bottom surface and at the outer surface of the toroidal support.

7. Process for producing tyres for vehicle wheels according to any one of the previous claims, wherein the step e) of cooling the toroidal support in said cooling unit (6) comprises the sequential transfer of the toroidal support in at least three specialised stations (6A, 6B, 6C) differing one from the other.

8. Process for producing tyres for vehicle wheels according to claim 7, wherein the sequential transfer of the toroidal support from one specialised station (6A, 6B, 6C) to the next is carried out by a third transfer device different from the first transfer device (R1) and from the second transfer device (R2).

9. Process for producing tyres for vehicle wheels according to claim 7, wherein the sequential transfer of the toroidal support from one specialised station (6A, 6B, 6C) to the next one is carried out by the first transfer device (R1).

10. Process for producing tyres for vehicle wheels according to any of the previous claims, wherein at least one between steps d0) and d4) is carried out by said second transfer device (R2).

11. Process for producing tyres for vehicle wheels according to any of the previous claims, wherein at least one among steps d1), d2) and d3) is carried out by a device (SR1) for dismounting/remounting the toroidal support.

12. Process for producing tyres for vehicle wheels according to claim 2, wherein said step g) of transferring the cooled toroidal support in output from the working station (7) is followed by a step h) of introducing the toroidal support into said building line (2) for building a further tyre.

13. Plant (1) for producing tyres for vehicle wheels comprising:
- a line (2) for building a green tyre on a respective toroidal support;
- a line (3) for moulding and vulcanizing the tyre;
- at least one working station (7) interposed between said building line (2) and said moulding and vulcanization line (3);
- at least a first transfer device (R1) for transferring the moulded and vulcanized tyre and the respective toroidal support into said working station (7);
- wherein said working station (7) comprises:
- at least one removing unit (5) for removing the moulded and vulcanized tyre from the respective toroidal support;
- at least one cooling unit (6) for cooling the toroidal support; and
- at least a second transfer device of the toroidal support (R2), different from the first transfer device (R1), for transferring the toroidal support from the tyre removing unit (5) to the toroidal support cooling unit (6) and for dismounting the toroidal support and/or remounting the toroidal support.

14. Plant (1) for producing tyres for vehicle wheels according to claim 13, wherein the first transfer device (R1) is also adapted for transferring the toroidal support outward said working station (7).

15. Plant (1) for producing tyres for vehicle wheels according to any one of claims 13 or 14, wherein the cooling unit (6) comprises at least three specialised stations (6A, 6B, 6C) for cooling the toroidal support.

16. Plant (1) for producing tyres for vehicle wheels according to claim 15, wherein each of said specialised stations (6A, 6B, 6C) is adapted for performing a function that differs from the functions performed by the remaining two specialised stations.

17. Plant (1) for producing tyres for vehicle wheels according to claim 15 or 16, wherein said specialised stations (6A, 6B, 6C) comprise dispensing devices (13, 14, 15, 16, 17) for dispensing cooling fluids.

18. Plant (1) for producing tyres for vehicle wheels according to claim 15, 16 or 17, wherein said specialised stations (6A, 6B, 6C) comprise at least a first specialised station (6A) including at least one cooling water dispensing device (13, 14).

19. Plant (1) for producing tyres for vehicle wheels according to claim 15, 16 or 17, wherein said specialised stations (6A, 6B, 6C) comprise at least a second specialised station (6B) including at least one cooling air dispensing device (15, 16, 17).

20. Plant (1) for producing tyres for vehicle wheels according to any one of claims 15 to 19, wherein said cooling unit (6) is provided with a third transfer device for the sequential transfer of the toroidal support from one specialised station (6A, 6B, 6C) to the next one, said third device being different from the first transfer device (R1) and from the second transfer device (R2).

21. Plant (1) for producing tyres for vehicle wheels according to any one of claims 15 to 19, wherein said first transfer device (R1) is also adapted for the sequential transfer of the toroidal support from one specialised station (6A, 6B, 6C) of the cooling unit (6) to the next one.

22. Plant (1) for producing tyres for vehicle wheels according to any one of claims 13 to 21, wherein said removing unit (5) is provided with a dismounting/remounting device (SR1) adapted for dismounting the toroidal support and remounting it after the tyre has been removed.

23. Plant (1) for producing tyres for vehicle wheels according to any one of claims 13 to 21, wherein said second transfer device (R2) comprises a handling device (4) adapted for extracting from the toroidal support and inserting in the toroidal support a support shaft.

24. Plant (1) for producing tyres for vehicle wheels according to any one of claims 13 to 23, wherein said cooling unit (6) is further provided with at least one stand-by position (20) for the toroidal supports.

25. Plant (1) for producing tyres for vehicle wheels according to any one of claims 14 to 24, further comprising at least one rail operatively associated with at least one of said first transfer device (R1) and second transfer device (R2).

## Patentansprüche

1. Verfahren zum Produzieren von Reifen für Fahrzeugräder mit den Schritten des:
a) Aufbauens eines Reifens auf einem ringförmigen Lager in einer Aufbaustraße (2) einer Produktionsfabrik (1),
b) Formens und Vulkanisierens des aufgebauten Reifens in einer Vulkanisierungsstraße (3) der Produktionsfabrik (1)
c) Übertragens mittels einer ersten Übertragungseinrichtung (R1) des ringförmigen Lagers und des zugehörigen geformten und vulkanisierten Reifens zu einer Bearbeitungsstation (7) mit einer Entfernungseinheit (5) zum Entfernen des Reifens von dem jeweiligen ringförmigen Lager und mit einer Kühlungseinheit (6) zum Kühlen des ringförmigen Lagers,
d) Entfernens des geformten und vulkanisierten Reifens von dem zugehörigen ringförmigen Lager in der Entfernungseinheit (5),
e) Übertragens des ringförmigen Lagers von der Entfernungseinheit (5) zu der Kühlungseinheit (6) mittels einer zweiten Übertragungseinrichtung (R2) verschieden von der ersten Übertragungseinrichtung (R1),
f) Kühlens des ringförmigen Lagers in der Kühlungseinheit (6),
wobei Schritt d) des Entfernens des geformten und vulkanisierten Reifens von dem zugehörigen ringförmigen Lager in der Entfernungseinheit (5) als Unterschritte aufweist:
d0) Extrahieren einer Lagerwelle des ringförmigen Lagers,
d1) Abnehmen des ringförmigen Lagers,
d2) Trennen des vulkanisierten Reifens von dem ringförmigen Lager,
d3) Wiederanbringen des ringförmigen Lagers,
d4) Einführen der Lagerwelle in das wiederangebrachte ringförmige Lager,
wobei wenigstens einer von Schritten d1) und d2) durch die zweite Übertragungseinrichtung (R2) ausgeführt wird.

2. Verfahren zum Produzieren von Reifen für Fahrzeugräder nach Anspruch 1, mit, nach dem Schritt f) des Kühlens des ringförmigen Lagers, dem Schritt g) des Übertragens des gekühlten ringförmigen Lagers aus der Bearbeitungsstation (7) heraus mittels der ersten Übertragungseinrichtung (R1).

3. Verfahren zum Produzieren von Reifen für Fahrzeugräder nach einem der vorhergehenden Ansprüche, bei dem Schritt f) des Kühlens des ringförmigen Lagers als Unterschritte aufweist:
f1) Kühlen des ringförmigen Lagers bis zu einer Temperatur zwischen ungefähr 100°C und ungefähr 110°C,
f2) Kühlen des ringförmigen Lagers bis zu einer Temperatur zwischen ungefähr 55°C und ungefähr 65°C,
f3) Kühlen des ringförmigen Lagers bis zu einer Temperatur, die für den Reifenaufbauprozess geeignet ist.

4. Verfahren zum Produzieren von Reifen für Fahrzeugräder nach Anspruch 3, bei dem Schritt f1) mittels Kühlwasser durchgeführt wird.

5. Verfahren zum Produzieren von Reifen für Fahrzeugräder nach Anspruch 4, bei dem wenigstens einer von Schritten f2) und f3) mittels Kühlluft durchgeführt wird.

6. Verfahren zum Produzieren von Reifen für Fahrzeugräder nach Anspruch 5, bei dem die Kühlluft an der oberen Oberfläche, der unteren Oberfläche und der äußeren Oberfläche des ringförmigen Lagers ausgegeben wird.

7. Verfahren zum Produzieren von Reifen für Fahrzeugräder nach einem der vorhergehenden Ansprüche, bei dem Schritt e) des Kühlens des ringförmigen Lagers in der Kühlungseinheit (6) den Schritt sequentieller Übertragung des ringförmigen Lagers in wenigstens drei spezialisierte Stationen (6A, 6B, 6C) aufweist, die voneinander verschieden sind.

8. Verfahren zum Produzieren von Reifen für Fahrzeugräder nach Anspruch 7, bei dem die sequentielle Übertragung des ringförmigen Lagers von einer spezialisierten Station (6A, 6B, 6C) zu der nächsten mittels einer dritten Übertragungseinrichtung verschieden von der ersten Übertragungseinrichtung (R1) und der zweiten Übertragungseinrichtung (R2) durchgeführt wird.

9. Verfahren zum Produzieren von Reifen für Fahrzeugräder nach Anspruch 7, bei dem die sequentielle Übertragung des ringförmigen Lagers von einer spezialisierten Station (6A, 6B, 6C) zu der nächsten durch die erste Übertragungseinrichtung (R1) durchgeführt wird.

10. Verfahren zum Produzieren von Reifen für Fahrzeugräder nach einem der vorhergehenden Ansprüche, bei dem wenigstens einer von Schritten d0) und d4) durch die zweite Übertragungseinrichtung (R2) durchgeführt wird.

11. Verfahren zum Produzieren von Reifen für Fahrzeugräder nach einem der vorhergehenden Ansprüche, bei dem wenigstens einer von Schritten d1), d2) und d3) durch eine Einrichtung (SR1) zum Abnehmen/Wiederanbringen des ringförmigen Lagers durchgeführt wird.

12. Verfahren zum Produzieren von Reifen für Fahrzeugräder nach Anspruch 2, bei dem Schritt g) des Übertragens des gekühlten ringförmigen Lagers als Ausgabe von der Bearbeitungsstation (7) durch einen Schritt h) des Einführens des ringförmigen Lagers in die Aufbaustraße (2) zum Aufbauen eines weiteren Reifens gefolgt wird.

13. Fabrik (1) zum Produzieren von Reifen für Fahrzeugräder mit:
- einer Straße (2) zum Aufbauen eines unbearbeiteten Reifens auf einem jeweiligen ringförmigen Lager,
- einer Straße (3) zum Formen und Vulkanisieren des Reifens,
- wenigstens einer Bearbeitungsstation (7) zwischen der Aufbaustraße (2) und der Formungs- und Vulkanisierungsstraße (3),
- wenigstens einer ersten Übertragungseinrichtung (R1) zum Übertragen des geformten und vulkanisierten Reifens und des jeweiligen ringförmigen Lagers in die Bearbeitungsstation (7),
- wobei die Bearbeitungsstation (7) aufweist:
- wenigstens eine Entfernungseinheit (5) zum Entfernen des geformten und vulkanisierten Reifens von dem jeweiligen ringförmigen Lager,
- wenigstens eine Kühlungseinheit (6) zum Kühlen des ringförmigen Lagers und
- wenigstens eine zweite Übertragungseinrichtung des ringförmigen Lagers (R2) verschieden von der ersten Übertragungseinrichtung (R1) zum Übertragen des ringförmigen Lagers von der Reifenentfernungseinheit (5) zu der Kühlungseinheit (6) des ringförmigen Lagers und zum Abnehmen des ringförmigen Lagers und/oder dem Wiederanbringen des ringförmigen Lagers.

14. Fabrik (1) zum Produzieren von Reifen für Fahrzeugräder nach Anspruch 13, bei der die erste Übertragungseinrichtung (R1) auch zum Übertragen des ringförmigen Lagers aus der Bearbeitungsstation (7) heraus angepasst ist.

15. Fabrik (1) zum Produzieren von Reifen für Fahrzeugräder nach einem der Ansprüche 13 oder 14, bei der die Kühlungseinheit (6) wenigstens drei spezialisierte Stationen (6A, 6B, 6C) zum Kühlen des ringförmigen Lagers aufweist.

16. Fabrik (1) zum Produzieren von Reifen für Fahrzeugräder nach Anspruch 15, bei der jede der spezialisierten Stationen (6A, 6B, 6C) zum Ausführen einer Funktion angepasst ist, die von den Funktionen verschieden ist, die von den zwei verbleibenden spezialisierten Stationen durchgeführt wird.

17. Fabrik (1) zum Produzieren von Reifen für Fahrzeugräder nach Anspruch 15 oder 16, bei der die spezialisierten Stationen (6A, 6B, 6C) Ausgabeeinrichtungen (13, 14, 15, 16, 17) zum Ausgeben von Kühlungsfluiden aufweisen.

18. Fabrik (1) zum Produzieren von Reifen für Fahrzeugräder nach Anspruch 15, 16 oder 17, bei der die spezialisierten Stationen (6A, 6B, 6C) wenigstens eine erste spezialisierte Station (6A) mit wenigstens einer Kühlwasser-Ausgabeeinrichtung (13, 14) aufweisen.

19. Fabrik (1) zum Produzieren von Reifen für Fahrzeugräder nach einem der Ansprüche 15, 16 oder 17, bei der die spezialisierten Stationen (6A, 6B, 6C) wenigstens eine zweite spezialisierte Station (6B) mit wenigstens einer Kühlluft-Ausgabeeinrichtung (15, 16, 17) aufweisen.

20. Fabrik (1) zum Produzieren von Reifen für Fahrzeugräder nach einem der Ansprüche 15 bis 19, bei der die Kühlungseinheit (6) mit einer dritten Übertragungseinrichtung zum sequentiellen Übertragen des ringförmigen Lagers von einer spezialisierten Station (6A, 6B, 6C) zu der nächsten aufweist, wobei die dritte Einrichtung von der ersten Übertragungseinrichtung (R1) und der zweiten Übertragungseinrichtung (R2) verschieden ist.

21. Fabrik (1) zum Produzieren von Reifen für Fahrzeugräder nach einem der Ansprüche 15 bis 19, bei der die erste Übertragungseinrichtung (R1) auch für die sequentielle Übertragung des ringförmigen Lagers von einer spezialisierten Station (6A, 6B, 6C) der Kühlungseinheit (6) zu der nächsten angepasst ist.

22. Fabrik (1) zum Produzieren von Reifen für Fahrzeugräder nach einem der Ansprüche 13 bis 21, bei der die Entfernungseinheit (5) mit einer Abnahme/Wiederanbringeinrichtung (SR1) versehen ist, die zum Abnehmen des ringförmigen Lagers und zum Wiederanbringen, nachdem der Reifen entfernt wurde, angepasst ist.

23. Fabrik (1) zum Produzieren von Reifen für Fahrzeugräder nach einem der Ansprüche 13 bis 21, bei der die zweite Übertragungseinrichtung (R2) eine Handhabungseinrichtung (4) aufweist, die angepasst ist, um das ringförmige Lager zu extrahieren und um in das ringförmige Lager eine Lagerwelle einzusetzen.

24. Fabrik (1) zum Produzieren von Reifen für Fahrzeugräder nach einem der Ansprüche 13 bis 23, bei der die Kühlungseinheit (6) ferner mit wenigstens einer Warteposition (20) für die ringförmigen Lager versehen ist.

25. Fabrik (1) zum Produzieren von Reifen für Fahrzeugräder nach einem der Ansprüche 14 bis 24, ferner mit wenigstens einer Schiene, die operativ wenigstens der ersten Übertragungseinrichtung (R1) und/oder der zweiten Übertragungseinrichtung (R2) zugeordnet ist.

## Revendications

1. Procédé pour la production de pneus pour roues de véhicules comprenant les étapes de :
a) fabrication d'un pneu sur un support toroïdal dans une ligne de fabrication (2) d'une installation de production (1) ;
b) moulage et vulcanisation dudit pneu fabriqué dans une ligne de vulcanisation (3) de ladite installation de production (1) ;
c) transfert au moyen d'un premier dispositif de transfert (R1) du support toroïdal et du pneu concerné moulé et vulcanisé vers une station de travail (7) comprenant une unité d'enlèvement (5) pour enlever le pneu du support toroïdal respectif et une unité de refroidissement (6) pour refroidir le support toroïdal ;
d) enlèvement du pneu moulé et vulcanisé du support toroïdal concerné dans ladite unité d'enlèvement (5) ;
e) transfert du support toroïdal depuis ladite unité d'enlèvement (5) vers ladite unité de refroidissement (6) au moyen d'un deuxième dispositif de transfert (R2) distinct dudit premier dispositif de transfert (R1) ;
f) refroidissement du support toroïdal dans ladite unité de refroidissement (6) ;
dans lequel l'étape d) d'enlèvement du pneu moulé et vulcanisé du support toroïdal 1 concerné dans ladite unité d'enlèvement (5) comprend les sous-étapes de :
d0) extraction d'un arbre de support dudit support toroïdal ;
d1) démontage du support toroïdal ;
d2) séparation du pneu vulcanisé du support toroïdal ;
d3) remontage du support toroïdal ;
d4) insertion dudit arbre de support dans le support toroïdal remonté ;
dans lequel au moins l'une desdites étapes d1) et d2) est réalisée par le deuxième dispositif de transfert (R2).

2. Procédé pour la production de pneus pour roues de véhicules selon la revendication 1, comprenant après l'étape f) de refroidissement du support toroïdal, l'étape g) de transfert du support toroïdal refroidi vers l'extérieur de la station de travail (7) au moyen du premier dispositif de transfert (R1).

3. Procédé pour la production de pneus pour roues de véhicules selon l'une des revendications précédentes, dans lequel l'étape f) de refroidissement du support toroïdal comprend les sous-étapes de :
f1) refroidissement du support toroïdal à une température comprise entre environ 100°C et environ 110°C ;
f2) refroidissement du support toroïdal à une température comprise entre environ 55°C et environ 65°C ;
f3) refroidissement du support toroïdal à une température adéquate pour le procédé de fabrication de pneu ;

4. Procédé pour la production de pneus pour roues de véhicules selon la revendication 3, dans lequel l'étape f1) est réalisée au moyen d'eau de refroidissement.

5. Procédé pour la production de pneus pour roues de véhicules selon la revendication 4, dans lequel au moins l'une des étapes f2) et f3) est réalisée au moyen d'air de refroidissement.

6. Procédé pour la production de pneus pour roues de véhicules selon la revendication 5, dans lequel l'air de refroidissement est distribué à la surface supérieure, à la surface inférieure et à la surface extérieure du support toroïdal.

7. Procédé pour la production de pneus pour roues de véhicules selon l'une quelconque des revendications précédentes, dans lequel l'étape e) de refroidissement du support toroïdal dans ladite unité de refroidissement (6) comprend le transfert séquentiel du support toroïdal dans au moins trois stations spécialisées (6A, 6B, 6C) distinctes l'une de l'autre.

8. Procédé pour la production de pneus pour roues de véhicules selon la revendication 7, dans lequel le transfert séquentiel du support toroïdal depuis une station spécialisée (6A, 6B, 6C) vers la suivante est réalisé par un troisième dispositif de transfert distinct du premier dispositif de transfert (R1) et du deuxième dispositif de transfert (R2).

9. Procédé pour la production de pneus pour roues de véhicules selon la revendication 7, dans lequel le transfert séquentiel du support toroïdal depuis une station spécialisée (6A, 6B, 6C) vers la suivante est réalisé par le premier dispositif de transfert (R1).

10. Procédé pour la production de pneus pour roues de véhicules selon l'une quelconque des revendications précédentes, dans lequel au moins une des étapes d0) et d4) est réalisée par ledit deuxième dispositif de transfert (R2).

11. Procédé pour la production de pneus pour roues de véhicules selon l'une quelconque des revendications précédentes, dans lequel au moins une des étapes d1), d2), d3) est réalisée par un dispositif (SR1) pour démonter/remonter le support toroïdal.

12. Procédé pour la production de pneus pour roues de véhicules selon la revendication 2, dans lequel la dite étape g) de transfert du support toroïdal refroidi en sortie de la station de travail (7) est suivi d'une étape h) d'introduction du support toroïdal dans ladite ligne de fabrication (2) pour fabriquer un pneu supplémentaire.

13. Installation (1) pour la fabrication de pneus pour roues de véhicules comprenant :
- une ligne (2) pour fabriquer un pneu vert sur un support toroïdal respectif ;
- une ligne (3) pour mouler et vulcaniser le pneu ;
- au moins une station de travail (7) placée entre ladite ligne de fabrication (2) et ladite ligne de moulage et vulcanisation (3) ;
- au moins une premier dispositif de transfert (R1) pour transférer le pneu moulé et vulcanisé et le support toroïdal respectif dans ladite station de travail (7) ;
- ladite station de travail (7) comprenant :
- au moins une unité d'enlèvement (5) pour enlever le pneu moulé et vulcanisé du support toroïdal respectif ;
- au moins une unité de refroidissement (6) pour refroidir le support toroïdal ; et
- au moins un deuxième dispositif de transfert du support toroïdal (R2), distinct du premier dispositif de transfert (R1), pour transférer le support toroïdal depuis l'unité d'enlèvement de pneu (5) vers l'unité de refroidissement de support toroïdal (6) et pour démonter le support toroïdal et/ou remonter le support toroïdal.

14. Installation (1) pour la fabrication de pneus pour roues de véhicules selon la revendication 13, dans laquelle le premier dispositif de transfert (R1) est également agencé pour transférer le support toroïdal vers l'extérieur de ladite station de travail (7).

15. Installation (1) pour la fabrication de pneus pour roues de véhicules selon l'une quelconque des revendications 13 ou 14, dans laquelle l'unité de refroidissement (6) comprend au moins trois stations spécialisées (6A, 6B, 6C) pour refroidir le support toroïdal.

16. Installation (1) pour la fabrication de pneus pour roues de véhicules selon la revendication 15, dans laquelle chacune desdites stations spécialisées (6A, 6B, 6C) est agencée pour réaliser une fonction qui est différente des fonctions réalisées par les deux autres stations spécialisées restantes.

17. Installation (1) pour la fabrication de pneus pour roues de véhicules selon la revendication 15 ou 16, dans laquelle lesdites stations spécialisées (6A, 6B, 6C) comprennent des dispositifs de distribution (13, 14, 15, 16, 17) pour distribuer des fluides de refroidissement.

18. Installation (1) pour la fabrication de pneus pour roues de véhicules selon la revendication 15, 16 ou 17, dans laquelle lesdites stations spécialisées (6A, 6B, 6C) comprennent au moins une première station spécialisée (6A) incluant au moins un dispositif distribuant de l'eau de refroidissement (13, 14).

19. Installation (1) pour la fabrication de pneus pour roues de véhicules selon la revendication 15, 16 ou 17, dans laquelle lesdites stations spécialisées (6A, 6B, 6C) comprennent au moins une deuxième station spécialisée (6B) incluant au moins un dispositif distribuant de l'air de refroidissement (15, 16, 17).

20. Installation (1) pour la fabrication de pneus pour roues de véhicules selon l'une quelconque des revendications 15 à 19, dans laquelle ladite unité de refroidissement (6) est pourvue d'un troisième dispositif de transfert pour le transfert séquentiel du support toroïdal depuis une station spécialisée (6A, 6B, 6C) vers la suivante, ledit troisième dispositif étant distinct du premier dispositif de transfert (R1) et du second dispositif de transfert (R2).

21. Installation (1) pour la fabrication de pneus pour roues de véhicules selon l'une quelconque des revendications 15 à 19, dans laquelle ledit premier dispositif de transfert (R1) est également agencé pour le transfert séquentiel du support toroïdal depuis une station spécialisée (6A, 6B, 6C) de l'unité de refroidissement (6) à la suivante.

22. Installation (1) pour la fabrication de pneus pour roues de véhicules selon l'une quelconque des revendications 13 à 21, dans laquelle ladite unité d'enlèvement (5) est pourvue d'un dispositif de démontage/remontage (SR1) agencé pour démonter le support toroïdal et le remonter après enlèvement du pneu.

23. Installation (1) pour la fabrication de pneus pour roues de véhicules selon l'une quelconque des revendications 13 à 21, dans laquelle ledit deuxième dispositif de transfert (R2) comprend un dispositif de manipulation (4) agencé pour extraire du support toroïdal et insérer dans le support toroïdal un arbre de support.

24. Installation (1) pour la fabrication de pneus pour roues de véhicules selon l'une quelconque des revendications 13 à 23, dans laquelle ladite unité de refroidissement (6) est en outre pourvue d'au moins un emplacement d'attente (20) pour les supports toroïdaux.

25. Installation (1) pour la fabrication de pneus pour roues de véhicules selon l'une quelconque des revendications 14 à 24, comprenant en outre au moins un rail fonctionnellement associé à au moins un desdits premier dispositif de transfert (R1) et deuxième dispositif de transfert (R2).
